(19) Europäisches Patentamt

European Patent Office

Office européen des brevets

(11) **EP 0 824 109 B1**

(12) **EUROPEAN PATENT SPECIFICATION**

(45) Date of publication and mention
of the grant of the patent:
**12.03.2003 Bulletin 2003/11**

(51) Int Cl.⁷: **C08B 37/18**, A23F 5/06

(21) Application number: **96202265.3**

(22) Date of filing: **12.08.1996**

(54) **Soluble instant inulin and process for its manufacture**

Lösliches Instant-Inulin und Verfahren zu dessen Herstellung

Inuline instantanée soluble et procédé pour sa fabrication

(84) Designated Contracting States:
**AT BE CH DE DK ES FI FR GB GR IE IT LI LU NL PT SE**
Designated Extension States:
**SI**

(43) Date of publication of application:
**18.02.1998 Bulletin 1998/08**

(73) Proprietor: **SOCIETE DES PRODUITS NESTLE S.A.**
**1800 Vevey (CH)**

(72) Inventor: **Loehmar, Karl**
**7015 Korntal 1 (DE)**

(74) Representative: **Thomas, Alain et al**
**55, avenue Nestlé**
**1800 Vevey (CH)**

(56) References cited:
**EP-A- 0 175 160**          **EP-A- 0 524 484**
**WO-A-96/24256**          **DE-A- 2 548 285**
**US-A- 4 565 705**          **US-A- 5 422 346**
**US-A- 5 527 556**

## Description

The invention concerns a soluble instant inulin and a process for the preparation of said instant inulin.

The US Patent No. 4'154'864 concerns a water-soluble grain consisting of dehydrated extract of vegetable material selected from the group consisting of coffee, chicory, tea and herbal decoction, said extract being extruded at a pressure of 1 to 10 bar and temperatures of 60 to 125°C into a vacuum chamber. This process is more a way for granulating or agglomerating the vegetable particles.

The european patent 0 524 484 deals with a soluble instant tea powder containing inulin in an amount ranging from 70 to 85 weight% and its manufacture. The inulin used does not undergo caramelisation.

WO 96/24256, which is a post-published prior art document according to Articles 54(3) and (4) EPC, discloses a water-soluble chicory powder made from caramelised chicory-extract powder containing between 40 and 65% inulin, between 4 and 10% reducing sugars and less than 5% fructose and glucose, and has a colour depth of between 1,0 and 2,5.

The object of the present invention is to obtain a soluble instant inulin , which has been obtained by treatment at a higher temperature to develop a taste profile.

The present invention concerns a soluble instant inulin having an inulin content in a range of 50 to 80 %, wherein said inulin has been obtained by a caramelization through an extruder.

According to the invention, the starting material is a white powder composed nearly completely of inulin, such as inulin obtained from chicory, artichoke, topinambour, dalia or dandelion. The polysaccharide inulin is composed of the monosaccharides fructose and glucose. The fructose units are linearly linked together with one glucose unit at the end. Since a sucrose unit forms the end of the chain, the inulin has no reducing power.

On industrial scale, inulin is produced in larger quantities by extraction of chicory roots. The purification of the extract from the roots is conducted by ultrafiltration, by ion exchange and active carbon treatment. With and without previous partial hydrolysis of the inulin, the extract is concentrated, spray-dried and the white powder offered as commercial product. Pure inulin obtained from chicory with a content of total carbohydrate of more than 99 % is preferably employed as starting material. This pure, non-hydrolyzed product has a content of reducing sugar of less than 5 %. Pure inulin powders, which were subjected a partial hydrolysis and contain reducing sugar in an amount comprised between 5 to 30 %, are also used. Less refined products are also used : they contain up to 15 % non-inulin components, like protein, organic acids and mineral substances as impurities.

During the caramelization, the inulin is decomposed to high-molecular, brown-coloured caramel compounds and low-molecular carbinyl compounds, such as aldehydes, ketones and organic acids. Hydrolytic reactions take place likewise, lead to oligo- or polysaccharides and reach the state of monosaccharides, such as fructose and glucose. These compounds contribute to the colour and the taste of caramelized inulin.

The caramelized product has a higher content of reducing sugars than the pure, non-hydrolyzed inulin employed as starting material for the caramelization. According to the invention, the content of reducing sugar amounts to about 2 % in the pure, non-hydrolyzed inulin and increases to a range of 4 to 15 % by weight in the caramelized product. It depends, wether the water initially contained in the inulin powder is removed or retained during processing and as a consequence of it, the hydrolytic reactions are either suppressed or predominate by the caramelization.

After treatment through the extruder, the inulin powder has a color strength comprised between 1.0 and 4.0. The powder has preferably an inulin content in the range of 30 to 60 %.

The precise methods for the measure of the inulin content, the reducing sugar and the color strength will be given hereunder.

The soluble instant inulin according to the invention is normally not used alone, but in admixture with a compound chosen from the group consisting of soluble instant coffee, soluble instant chicory and a mixture thereof. In this case, the amount in the mixture of the inulin is comprised between 5 and 95 %. All the percentages given in the present specification are by weight.

The soluble inulin according to the invention contains further a compound chosen from the group consisting of sugars, milk powder and a mixture thereof. It is further part of the invention that an additive chosen from the group consisting of potassium carbonate, sodium carbonate and comparable alkaline substances are added up to 1.0 % in order to speed up the caramelization of the inulin.

The invention concerns further the process for the preparation of the above mentioned soluble instant inulin, wherein an inulin powder is caramelized through an extruder at a temperature of 180 to 300°C and at a residence time up to 5 minutes, cooled and ground.

The caramelization is preferably carried out at a temperature between 250 and 290°C for up to 3 minutes. The feeding rate of the inulin powder through the extruder is regulated in order to obtain the desired caramelization degree resp. colour strength. The extruder is the only alternative from the plant units coming into question for the caramelization of inulin, for example single-screw extruders or twin-screw extruders, whereby twin-screw extruders are preferred.

Several types of cooling equipment for cooling the caramelized product are available, such as belt conveyor, tumbler or fluidized bed by using blast air, by spraying liquid nitrogen or dosing powdered dry ice ($CO_2$).

After the caramelized extrudate is cooled, it will be particulated to an appropriate particle size of 0.5 to 3 mm. Several grinders, such as hammer mill, roller mill and Fitz Mill, can be used. The powder is used per se or agglomerated.

The characterization of the inulin powder according to the invention comprises the following determination methods :

**Dry Matter**

About 2g powder are precisely weighed into a nickel dish and dried at 85°C for two hours. After cooling, the sample is weighed out.

$$\% \text{ Dry Matter} = \frac{\text{Weighing in x 100 \%}}{\text{g Initial sample}}$$

**Color Strength**

The colour strength is the measurement of the extinction from a 1 % aqueous solution of the inulin powder with light of 500 nm through a cuvette of 1 cm path length.

1 g powder based on dry matter is weighed into a 250 ml glass beaker and distilled water is added to supplement the weight up to 100g. The powder is brought into solution through stirring. The sample solution is heated to about 70°C, then cooled in a cold water bath and brought back by the addition of water to the original weight. For measuring the color strength, the solution is diluted five times (for example, 20 ml to 100 ml). The diluted solution is then centrifuged and the extinction of the cleared solution measured in 1 cm cuvettes at 500 nm.

**Reducing sugar**

3 g of sample are weighed with 1 g of calcium carbonate in a 150 ml glass beaker. After addition of 70 ml of water, the suspension is left during 30 min. at 60°C in a thermostat. The suspension is completed to a volume of 100 ml by the addition of water. The solution is filtered and 10 ml of the filtrate is used for the determination of the sugar content according to Potterat-Eschmann.

$$\% \text{ red. sugar in dry matter} =$$

$$\frac{\text{mg of sugar from consumption x 100}}{\text{g initial sample x \% dry matter}}$$

**Fructose and Glucose**

The solution used for the determination of the reducing sugars is diluted 1:2 and 0.1 ml diluted sample solution are used for the enzymatic test.

$$\% \text{ Free Fru resp. Glu in dry matter} =$$

$$\frac{\text{g/l x 100 x 100}}{\text{g Initial sample x 5 x \% dry matter}}$$

**Inulin**

About 1.5 g of sample material are weighed in a 100 ml volumetric flask and heated with a 75 ml solution containing 0.5 % hydrochloric acid for 15 min in boiling water. After cooling, 5 drops of a solution in ethanol containing 0.5 % bromothymol-blue and a 2N sodium hydroxide solution are added until the indicator changes its color (here are around 4.5 ml necessary). After addition of 2 ml of a saturated solution of lead acetate, the volumetric flask is filled up to the mark . The solution is shaken and then filtered.

20 ml of a 2% sodium oxalate solution are placed in a 100 ml volumetric flask and 25 ml clear filtrate is pipetted in. After shaking and filling up the volumetric flask with water, the solution is filtered. For the enzymatic determination, 20 ml clear solution are diluted to 100 ml.

$$\% \text{ Total Fru resp. Glu in dry matter} =$$

$$\frac{\text{g/l x 20000}}{\text{g initial sample x \% dry matter}}$$

$$\% \text{ inulin} = 0.9 ( \% \text{ Total Glu} + \text{Fru} - \% \text{ Free Glu} + \text{Fru})$$

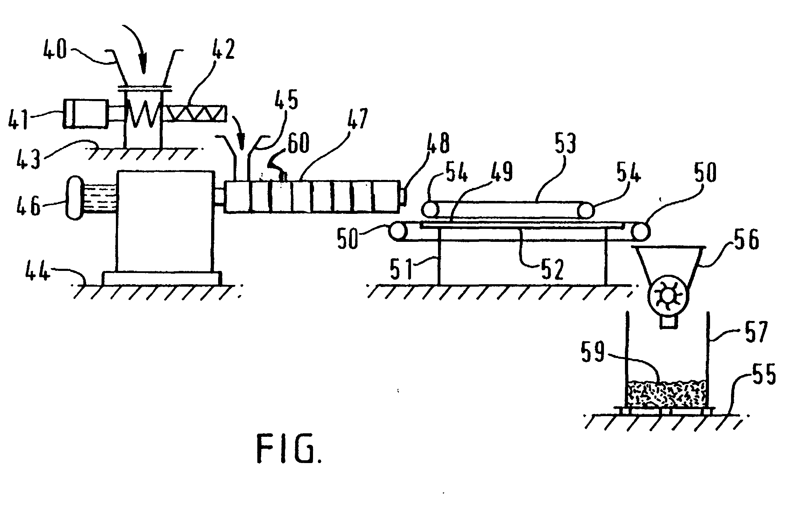

The description is made now in relation with the drawing, wherein the single figure is a schematic view of the caramelizing of the inulin.

The transport of the inulin powder from the hopper (40) to the extruder (47) for caramelization occurs through the dosing unit (42), which is driven by motor (41). The dosing unit (42) is disposed on the ground (43) and the extruder (47) below on the ground (44).

From the dosing unit (42), the powder is delivered through hopper (45) in the first segment of extruder (47). A twin-screw extruder is used with eight segments, which is driven by a motor (46). The segments of the number three to eight are heated with synthetic oil which circulates between the segments of the extruder and an external heating system (not shown) and heats the twin screw barrels to the desired temperature . A venting port (60) is located at the third segment to vent the air and steam generated from the powder.

A plastification of the inulin powder is obtained in the beginning of the heating zone. The pressure increases then due to the formation of carbon dioxide. An homogenous, caramelized product is discharged at the exiting port which is fitted with two dies (48) attached to the end of the extruder.

After exiting the nozzle (48), the hot, thin viscous product falls on a strengthened belt (49), which is running between two rolls (50). The belt stands with frame (51) on the ground (44) and houses a cooling chamber (52) for cooling down the extrudate to about 15 °C. The caramelized product is flatly pressed to a thin layer between the lower belt (49) and the upper belt (53) which are driven by two rollers each (50 and 54). In order to rapidly cool down the caramelized inulin, a blast of cooling air (not shown ) is applied to the other side of the upper belt. The caramelized product is separated from the belt (49) and ground in a mill (56). The powder (59) fall in the container (57), which stood on the ground (55).

If a constant temperature profile of the segments of the extruder is used, the degree of caramelization of the inulin depends on the throughput. A darker caramelized inulin powder is obtained by a smaller throughput and a lighter color by a higher throughput.

The degree of purity and the degree of hydrolysis from the inulin powder influences the development of the colour and the decomposition of the carbohydrate during the caramelization. Since the pyrolysis of the inulin is strongly exothermic process, pure inulin is caramelized slightly darker at a certain temperature profile than a partially hydrolyzed inulin. If the inulin contains impurities on a certain extent, the extrudate has a substantially darker colour than the control sample.

The following examples illustrate and explain the present invention.

**Example 1**

The caramelization of pure, non-hydrolyzed inulin ( 97.5 % inulin, 2.5 % reducing sugars) was carried out in a twin-screw extruder from Werner & Pfleiderer. The throughput of the inulin powder amounted to 30 kg per hour. The barrels of the number three to eight were heated to 280 °C and the speed of revolution from the screws came to 100 rpm. The caramelized product showed a colour strength of 1.37, a content of inulin of 41.4 % and of reducing sugars of 7.0 %.

**Example 2**

As starting material a mixture of 99.8 % pure, non-hydrolyzed inulin and 0.2 % potassium carbonate was used. The caramelization of the mixture was conducted under the conditions as described in example 1. The extrudate showed a colour strength of 4.10, an inulin content of 31.5 % and a reducing sugar content of 8.2 %.

**Claims**

1. Soluble instant inulin having an inulin content in a range of 50 to 80 % by weight, obtainable by caramelization through an extruder at a temperature of 180 to 300 °C during up to 5 minutes, wherein said inulin has a reducing sugar content in a range from 4 to 15 % by weight, a color strength in a range of 1.0 to 4.0.

2. Soluble instant inulin according to claim 1 wherein the inulin content is in the range of 30 to 60 % by weight.

3. Soluble instant inulin according to any of claims 1 or 2, wherein it contains further a compound chosen from the group consisting of soluble instant coffee, soluble instant chicory and a mixture thereof in percent by weight from 5 to 95 %.

4. Soluble instant inulin according to any of claims 1 to 3, wherein it contains further a compound chosen from the group consisting of sugars, milk powder and a mixture thereof.

5. Soluble inulin according to any of claims 1 to 4, wherein it contains an additive chosen from the group consisting of potassium carbonate, sodium carbonate and comparable alkaline substances in quantities up to 1.0 % by weight for accelerating the caramelization.

6. A process for the preparation of the soluble instant inulin according to any of claims 1 to 5, wherein an inulin powder is caramelized through an extruder at a temperature of 180 to 300°C and at a residence time up to 5 minutes, cooled and ground.

7. A process according to claim 6, wherein the extruder is a single-screw or twin-screw extruder.

**Patentansprüche**

1. Lösliches Instantinulin mit einem Inulingehalt in einem Bereich von 50 bis 80 Gew.-%, das erhältlich ist durch Karamelisierung durch einen Extruder bei einer Temperatur von 180 bis 300°C innerhalb von bis zu 5 Minuten, wobei das genannte Inulin einen Gehalt an reduzierendem Zucker in einem Bereich von 4 bis 15 Gew.-% und eine Farbstärke in einem Bereich von 1,0 bis 4,0 aufweist.

2. Lösliches Instantinulin nach Anspruch 1, wobei der Inulingehalt im Bereich von 30 bis 60 Gew.-% liegt.

3. Lösliches Instantinulin nach irgendeinem der Ansprüche 1 oder 2, wobei dieses außerdem eine Verbindung enthält, die aus der Gruppe ausgewählt ist, die besteht aus löslichem Instantkaffee, löslicher Instantzichorie und einer Mischung daraus, in 5 bis 95 Gew.-%.

**4.** Lösliches Instantinulin nach irgendeinem der Ansprüche 1 bis 3, wobei dieses außerdem eine Verbindung enthält, die aus der Gruppe ausgewählt ist, die besteht aus Zuckern, Milchpulver und einer Mischung daraus.

**5.** Lösliches Inulin nach irgendeinem der Ansprüche 1 bis 4, wobei dieses einen Zusatzstoff enthält, der aus der Gruppe ausgewählt ist, die besteht aus Kaliumcarbonat, Natriumcarbonat und vergleichbaren alkalischen Substanzen in Mengen von bis zu 1,0 Gew.-% zur Beschleunigung der Karamelisierung.

**6.** Verfahren zur Herstellung des löslichen Instantinulins nach irgendeinem der Ansprüche 1 bis 5, wobei ein Inulinpulver durch einen Extruder bei einer Temperatur von 180 bis 300°C und einer Verweilzeit von bis zu 5 Minuten karamelisiert, gekühlt und gemahlen wird.

**7.** Verfahren nach Anspruch 6, wobei der Extruder ein Einschnecken- oder Zweischneckenextruder ist.

**Revendications**

**1.** Inuline instantanée soluble ayant une teneur en inuline comprise dans l'intervalle de 50 à 80% en poids, pouvant être obtenue par caramélisation à travers une extrudeuse à une température comprise dans l'intervalle de 180 à 300°C pendant un temps allant jusqu'à 5 minutes, ladite inuline ayant une teneur en sucres réducteurs comprise dans l'intervalle de 4 à 15% en poids et une intensité de couleur comprise dans l'intervalle de 1,0 à 4,0.

**2.** Inuline instantanée soluble suivant la revendication 1, dans laquelle la teneur en inuline est comprise dans l'intervalle de 30 à 60% en poids.

**3.** Inuline instantanée soluble suivant l'une quelconque des revendications 1 et 2, qui contient en outre un composé choisi dans le groupe consistant en café instantané soluble, chicorée instantanée soluble et un de leurs mélanges en un pourcentage en poids de 5 à 95%.

**4.** Inuline instantanée soluble suivant l'une quelconque des revendications 1 à 3, qui contient en outre un composé choisi dans le groupe consistant en sucres, poudre de lait et un de leurs mélanges.

**5.** Inuline soluble suivant l'une quelconque des revendications 1 à 4, qui contient un additif choisi dans le groupe consistant en carbonate de potassium, carbonate de sodium et des substances alcalines comparables en des quantités allant jusqu'à 1,0% en poids pour accélérer la caramélisation.

**6.** Procédé pour la préparation de l'inuline instantanée soluble suivant l'une quelconque des revendications 1 à 5, dans lequel une poudre d'inuline est caramélisée à travers une extrudeuse à une température comprise dans l'intervalle de 180 à 300°C pendant un temps de séjour allant jusqu'à 5 minutes, refroidie et broyée.

**7.** Procédé suivant la revendication 6, dans lequel l'extrudeuse est une extrudeuse à une vis ou une extrudeuse à deux vis.

FIG.